# EUROPEAN PATENT SPECIFICATION

(11) **EP 1 271 988 B1**
(45) Date of publication and mention of the grant of the patent: **15.08.2007**
(21) Application number: 02100668.9
(22) Date of filing: 05.06.2002
(51) Int. Cl.: H04Q 7/38

(54) **Opening of a subscription in a mobile radio system**
Eröffnen einer Subscription in einem Mobilfunksystem
Ouverture d'un abonnement dans un système radio mobile

(30) Priority: 11.06.2001 FI 20015011
(43) Date of publication of application: 02.01.2003
(73) Proprietor: TeliaSonera Finland Oyj, 00510 Helsinki (FI)
(72) Inventor: LAHTI, Aapo, 02230, Espoo (FI); MATTILA, Mikko, 02230, Espoo (FI)
(74) Representative: Holmström, Stefan Mikael

(56) References cited:
- EP-A- 1 009 181
- US-A- 5 077 790
- US-A- 6 064 879

## Description

The present invention relates to opening a new subscription in a mobile system. The invention relates especially to a solution that facilitates the opening of a new subscription.

In known solutions, the opening of a new subscription requires that the customer needing the subscription visit a service centre of a mobile operator or an authorized representative thereof. At the service centre, the customer is given the SIM (Subscriber Identification Module) card associated with the new subscription, which after installation into a subscriber station enables the utilization of the subscription. Before the SIM card is handed over, the identity of the customer is verified. After this, the new subscription is activated at the service centre by entering the necessary information to a subscriber register through a computer terminal. The personal and address information associated with the new subscription are thus verified already during the handing-over of the SIM card and, consequently, reliably entered into the subscriber register.

A drawback of the known solution described above is that a new subscription can only be opened at the service centre of a mobile operator or an authorized representative thereof, in which the necessary equipment for entering the information into the subscriber register is available. So as to make the opening of subscriptions as simple as possible for the customers, the operator has to make sure that there are enough service centres so as to have one of them close to the customer. However, each service centre incurs costs, among other things because the equipment and a telecommunications connection are needed in the service centre to enter information to the subscriber register.

Previously there is also known from US - 6 064 879 a solution where a subscriber station is given a temporary ID before it is sold to a user. When a user has purchased such a subscriber station the user can via a designated number enter prescribed data in order to receive a permanent ID for the subscriber station. If a credit check based on the entered prescribed data indicates that the subscriber can be granted credit, then the network transmits a permanent ID to the subscriber station and the subscriber station stores this permanent ID in a memory in place of the temporary ID. Such a solution, however, includes a significant safety hazard, as it should not be possible to change the ID of a subscriber station. Further, as restrictions on use of the new subscription are dropped after the contact via the designated number, the economical risk for the operator is at a high level.

It is an object of the present invention to solve the problem described above and to provide a solution that facilitates the opening of a new subscription in a mobile system. This is achieved by a method according to independent claim 1 and a system according to independent claim 6.

The invention is based on the idea that the opening of a new subscription becomes easier than before, when the customers can open the new subscription themselves. This becomes possible when information on a new subscription and the identifier of the SIM card associated with it is stored into the mobile system even before the customer is known. To reduce the financial risk of possible misuse, the operator also according to the invention defines restrictions on use for the new subscription along with the other information. After this, the customer can open/activate the new subscription by sending an activation message that contains the identifier of the SIM card handed over to him and credit rating information, by means of which the credit rating of the customer can be verified. If the credit rating information is acceptable, the new subscription is activated in the mobile system so that it can be used within the scope of the restrictions on use.

The solution of the invention frees the customer from having to visit a service centre to open a new subscription in a mobile system and allows him to open the subscription by sending an activation message. This results in cost savings, because as many service centres with equipment for opening subscriptions as before are no longer needed. The logistics related to the handling of SIM cards is also improved, because SIM cards can be installed in the subscriber stations already at the factory, which also makes it possible to install into each subscriber station the most suitable SIM card. The customer thus obtains both the subscriber station and the SIM card associated with the new subscription at the same time.

Preferred embodiments of the method and system of the invention are set forth in the attached dependent claims 2 to 5 and 7 to 10.

In the following the invention will be described by way of example in greater detail and with reference to the attached figures, in which
Figure 1 is a flow chart of a first preferred embodiment of the method of the invention,
Figure 2 is a block diagram of a first embodiment of the system of the invention,
Figure 3 is a block diagram of a second embodiment of the system of the invention,
Figure 4 is a block diagram of a third embodiment of the system of the invention, and
Figure 5 is a block diagram of a fourth embodiment of the system of the invention.

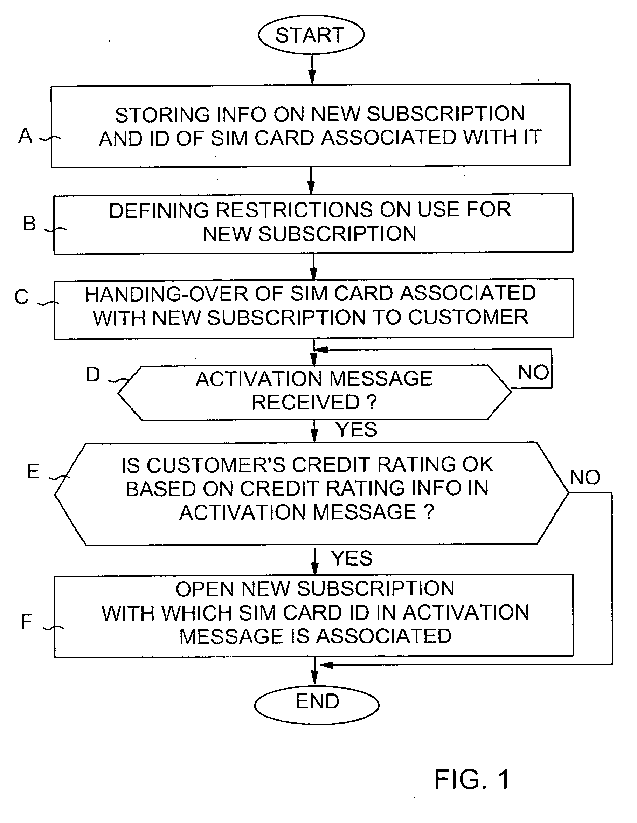

Figure 1 is a flow chart of a first preferred embodiment of the method of the invention. The method of Figure 1 can be utilized for instance in mobile systems like the GSM (Global System for Mobile communications) system.

In block A, a new subscription is opened in a mobile system already before the information of the future user, i.e. customer, of the subscription is available. The information of the new subscription and the identifier, such as serial number, of the SIM card associated with the subscription are stored in a subscriber register.

In block B, restrictions on use are defined for the new subscription, and said restrictions are stored in the subscriber register with the other information related to the subscription. In practice, the restrictions on use can, for instance, prevent the use of the subscription to make certain types of calls. Such prevented call types include international calls and calls to chargeable service numbers. The restrictions on use can also contain a certain balance limit, whereby the use of the subscription is stopped, if the unbilled amount of money of the subscription exceeds the balance limit.

In block C, the SIM card associated with the new subscription is handed over to a customer. The handing-over can be done in such a manner, for instance, that the customer buys and obtains possession of a new subscriber station to which the SIM card is installed already at the factory during manufacturing. Said subscriber station can be any subscriber station that utilizes a mobile system and thus requires a SIM card enabling the use of a subscription of a mobile system. Alternatively, the customer can naturally obtain the SIM card separate from a subscriber station. According to the invention, it is not necessary to record the identity or contact information of the customer when the SIM card is handed over.

In block D, the system waits until it receives from the customer an activation message, with which the customer tries to open/activate the subscription, the SIM card associated with which he has obtained. The activation message includes at least the identifier of the SIM card possessed by the customer and credit rating information. The credit rating information can be any information, by means of which the operator can verify that the customer is financially reliable. The number of a credit card, for instance, is suitable for this purpose. Alternatively, if the activation message is sent by a mobile station, for instance by a short message or by calling a predefined service number, the credit rating information can be the identifier of the subscription used to send the activation message, such as the calling subscriber identifier. The calling subscriber identifier is then transmitted automatically to the operator by the mobile system without the customer needing to add it to the activation message.

In block E, the credit rating of the customer is checked. This is done on the basis of the credit rating information included in the activation message. If the credit rating information is a credit card number, the check is an enquiry to the credit card company. If the credit rating information is the identifier of the subscription used to send the activation message, the credit rating is checked by verifying that the credit rating of the subscription used to send the activation message is acceptable.

If the credit rating is acceptable on the basis of the check done in block E, the system opens/activates in block F the new subscription of the mobile system, the SIM card identifier associated to which matches the SIM card identifier in the activation message. This can be done by searching from the new subscriptions in the subscriber register the subscription that has the SIM card identifier included in the activation message. Information that the subscription is opened/activated is recorded in the subscriber register for said subscription. The customer can then use the subscription within the scope of the restrictions on use.

The method of Figure 1 thus makes it possible to allow an "unknown" customer to use a new subscription, if credit rating information is received from the customer, on the basis of which the customer seems financially reliable. It is then possible to bill the customer for the use of the subscri p-tion depending on the credit rating information, for instance via a credit card or by sending the bills to the address, to which the bills of the subscription used to send the activation message are sent. The fact that restrictions on use are defined for the new subscription reduces possible credit losses. If the customer later wants to remove the restrictions, he can visit the service centre to prove his identity and provide his billing information. This, too, can be done without necessarily needing any computer equipment at the service centre to remove the restrictions on use from the subscription. To remove the restrictions, it is namely enough that the service centre verifies the identity and billing information of the customer, after which this information can be sent in a suitable manner, even by mail, to the operator. In practice, this means that the restrictions on use are removed after a time, but until then the customer can still use the subscription within the scope defined by the restrictions.

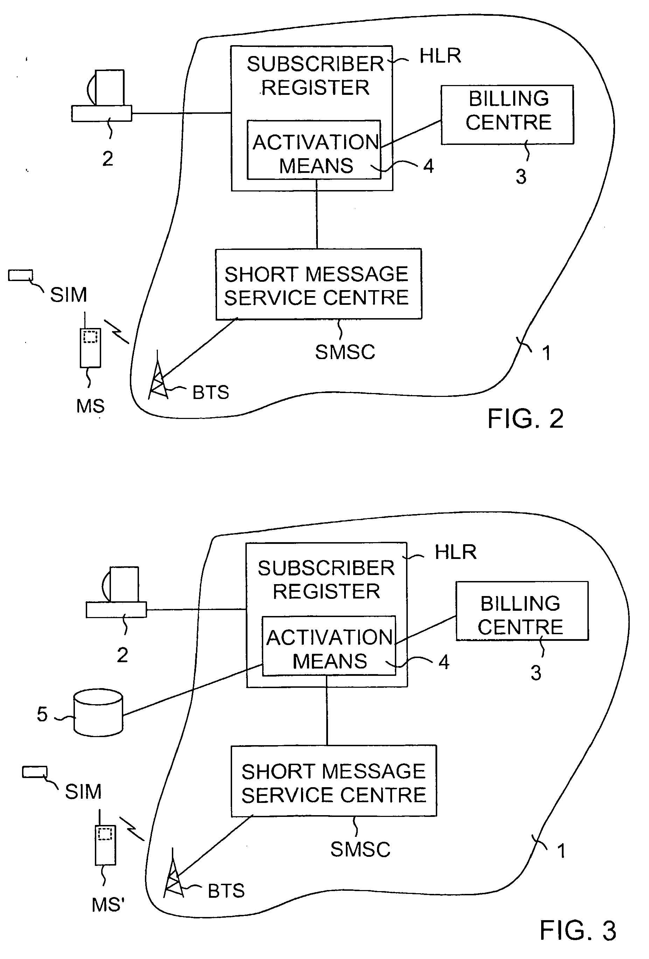

Figure 2 is a block diagram of a first preferred embodiment of the system of the invention. Figure 2 shows a section of a mobile system 1, in which the method of the flow chart of Figure 1 can be utilized. The section can be that of the GSM system, for instance.

To open a new subscription in the mobile system 1, the system has means 2, such as a computer terminal, residing in a network management centre, for instance, with which the operator can enter the information of the new subscription in a subscriber register HLR. With the information of the new subscription, the operator also stores into the subscriber register HLR the identifier of the SIM card SIM associated with the new subscription. The identifier of the SIM card can be its serial number, the operator's own identifier for said SIM card or any other identifier, with which the SIM card can be identified. Further, the operator stores into the subscriber register HLR and/or into a billing centre 3 (depending on the implementation) restrictions on use set for the new subscription. This way, the mobile system can control that, when the subscription is later used, it is only used within the restrictions defined by the operator.

When the information of the new subscription is stored in the subscriber register HLR, the SIM card SIM associated with the new subscription can be handed over to the customer. The handing-over can be done in such a manner that the customer obtains possession of the SIM card only or alternatively, the customer obtains possession of a subscriber station, in which the SIM card associated with the new subscription is already installed. In both cases, the customer receives the identifier of the SIM card that is preferably printed on the surface of the SIM card.

When the customer wants to take the new subscription into use, in the case of Figure 2, he sends an activation message with the subscriber station MS of the mobile system to the mobile system 1. In the case of Figure 2, it is assumed that the activation message is sent in a short message, but alternatively, the activation message can also be sent for instance by calling a predefined service number. In the case of Figure 2, it is assumed by way of example that the customer sends the activation message by utilizing a subscription that has already been opened earlier. The customer includes in the activation message at least the identifier of the SIM card SIM associated with the new subscription and credit rating information, which in the case of Figure 2 is the calling subscriber identifier of the used subscriber station MS. In the case of Figure 2, the customer does not need to separately add the calling subscriber identifier to the message, because the mobile system 1 ensures that the calling subscriber identifier is automatically transmitted with the short message, i.e. the activation message, to a short message service centre SMSC.

In the case of Figure 2, the activation message is thus transmitted through a base station BTS and the short message service centre SMSC to activation means 4 residing in the subscriber register HLR. After receiving the message, the activation means check whether the customer is financially reliable. In practice, the activation means can be implemented by a circuit solution, computer program or a combination of these. The activation means can also reside in some other network element than in the subscriber register mentioned above by way of example.

In the case of Figure 2, the credit rating information in the activation message is made up of the identifier of the subscription used to send the activation message, i.e. the calling subscriber identifier of the subscriber station MS. In this case, the activation means send an enquiry to a billing centre 3 to check the credit rating of the used subscription. The activation means 4 accept the credit rating of the customer, if the billing centre 3 communicates to the activation means 4 that the credit rating of the subscription used to send the activation message is acceptable. The activation means 4 then search from the subscriber register the new subscription that has the identifier of the SIM card SIM included in the activation message. For this new subscription, the activation means 4 store into the subscriber register HLR information that enables the use of the new subscription. The activation means store as the billing information of the new subscription the information that is stored for the subscription that sent the activation message. After this, the customer can utilize the new subscription by placing the SIM card SIM in a desired subscriber station.

Figure 3 shows a block diagram of a second preferred embodiment of the system of the invention. The embodiment of Figure 3 very closely corresponds to the embodiment of Figure 2. Therefore, the embodiment of Figure 3 is described by primarily emphasizing the differences between the embodiments of Figures 2 and 3.

In the case of Figure 3, it is assumed that the customer who received the SIM card SIM associated with the new subscription does not have an earlier subscription with which to send the activation message. Therefore, he uses the subscription of some other person to send the activation message. Alternatively, the customer may have an earlier subscription, but the earlier subscription is a subscription of another operator (i.e. not the same operator as the one whose subscription the customer is now opening/activating). In such a case, the customer must include in the activation message some other credit rating information than the identifier of the subscription used to send the activation message. Otherwise, the billing of the new subscription will be addressed to the holder of the subscription used to send the activation message or alternatively, if the subscription is the subscription of another operator, the checking of the credit rating may fail.

The customer can avoid the above-mentioned problems by using the number of his credit card as his credit rating information in the case of Figure 3. The customer then sends from the subscriber station MS' an activation message that contains the identifier of the SIM card SIM associated with the new subscription and the number of his credit card. The mobile system 1 transmits the activation message to the activation means 4. The activation means then note that the credit rating information in the activation message is a credit card number. In the case of Figure 3, the activation means then send an enquiry to the credit card company 5 to check whether the credit rating of the credit card is acceptable. If the credit card company 5 communicates to the activation means 4 that the credit rating is acceptable, the activation means 4 search from the subscriber register HLR the new subscription that has the identifier of the SIM card SIM included in the activation message. For this new subscription, the activation means 4 store into the subscriber register HLR information that enables the use of the new subscription. The activation means store as the billing information of the new subscription the credit card number included in the activation message. The use of the new subscription is then billed to the credit card. Alternatively, if the credit card company also transmits the information of the credit card holder being checked, the activation means 4 can store this information into the subscriber register HLR and/or billing centre 3 so that the billing can be done based on this information.

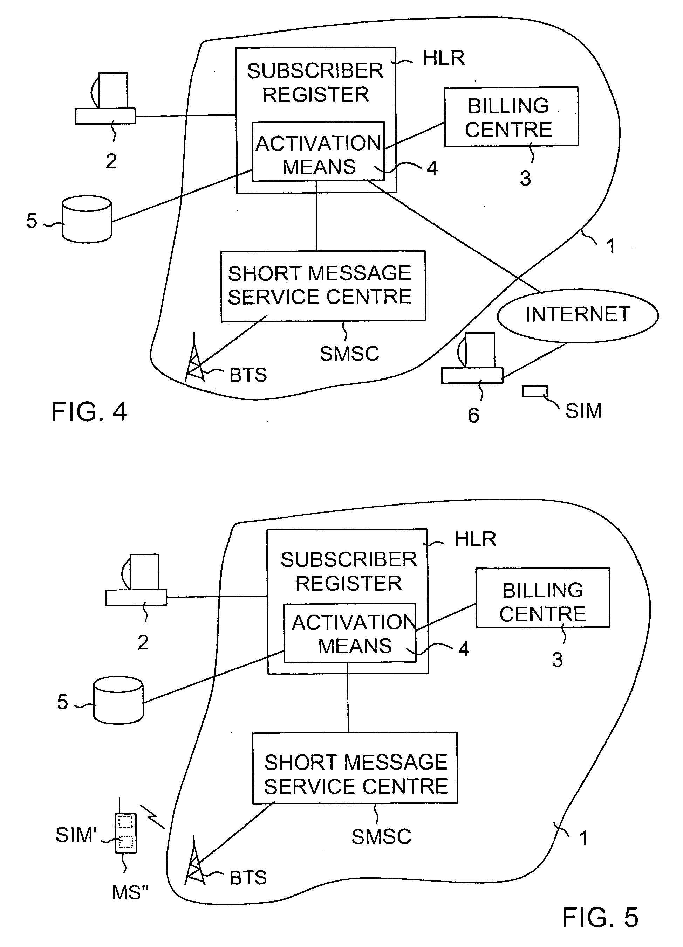

Figure 4 is a block diagram of a third preferred embodiment of the system of the invention. The embodiment of Figure 4 very closely corresponds to the embodiment of Figure 3. Therefore, the embodiment of Figure 4 is described by primarily emphasizing the differences between the embodiments of Figures 3 and 4.

Differing from the earlier embodiments, in the embodiment of Figure 4, the customer does not use a mobile system subscriber station to send the activation message, but instead sends the activation message from a computer terminal 6 via the Internet. To enable this, a data transmission connection is established from the mobile system 1 to the Internet 7. Figure 4 shows that the activation message proceeds from the Internet through the mobile system 1 to the activation means 4 of the subscriber register HLR. In practice, the operator of the mobile system can have an interface on his Internet home page, for instance, through which the customer can send the activation message. Alternatively, the customer can send the activation message for instance by e-mail to a predefined address or by fax to a predefined number.

In the case of Figure 4, the content of the activation message is the same as in the case of Figure 3, i.e. the activation message contains the identifier of the SIM card SIM associated with the new subscription and credit rating information consisting of the credit card number of the customer. The operation of the activation means 4 is also the same as in the case of Figure 3, i.e. the credit rating of the credit card is checked by enquiry to the credit card company, after which the new subscription is opened/activated as in the case of Figure 3, if the credit rating is acceptable.

Figure 5 is a block diagram of a fourth preferred embodiment of the system of the invention. The embodiment of Figure 5 very closely corresponds to the embodiment of Figure 3. Therefore, the embodiment of Figure 5 is described by primarily emphasizing the differences between the embodiments of Figures 3 and 5.

The embodiment of Figure 5 differs from the earlier embodiments in that the customer can utilize the new subscription and the SIM card SIM' associated with it to transmit the activation message. This becomes possible when information that enables the sending of the activation message are in advance stored in the subscriber register HLR and/or the SIM' card. In practice, the new subscription can then only be used to transmit a short message to a number that receives activation messages and/or to call a number that receives activation messages. The subscription cannot otherwise be used before the subscription is activated/opened by the activation means 4 in the subscriber register HLR. If desired, the number of short messages and calls and their duration can be restricted.

Because in the embodiment of Figure 5, the activation message is sent from the new subscription, the identifier of said subscription cannot be accepted as the credit rating information. Therefore, the customer must include into the activation message some other credit rating information, such as a credit card number, as described in Figure 3. In addition, the activation message must also include the identifier of the SIM card, as described in connection with the earlier embodiments.

Because in the case of Figure 5 the credit rating information is a credit card number, the activation means 4 perform the same actions to check the credit rating and to activate the new subscription as in Figure 3.

It is clear that even though the above only describes the activation of a SIM card belonging to the GSM system, the idea of the invention can also be applied to other telecommunications systems that use an arrangement corresponding to the SIM card. One such arrangement is the USIM card used in the third-generation UMTS mobile networks. The above description and the related figures are only intended to illustrate the present invention. Various variations and modifications of the invention will be apparent to a person skilled in the art without differing from the scope of protection of the invention disclosed in the attached claims.

## Claims

1. A method for opening a new subscription in a mobile system said new subscription requiring activation in the mobile system before it can be used in said mobile system, comprising:
storing into a subscriber register of the mobile system information on the new subscription and the SIM card associated with it, said SIM card having a specific identifier, **characterized by**
defining restrictions on use for the new subscription, said restrictions preventing certain types of calls and stopping the use of the subscription if a balance limit of the subscription is exceeded,
handing over the SIM card associated with the new subscription to a customer,
receiving from the customer an activation message that contains at least the identifier of the SIM card associated with said new subscription and credit rating information,
verifying by means of the credit rating information included in the activation message that the customer is financially reliable,
activating said new subscription in the mobile system by storing in the subscriber register information that causes the mobile system to allow a subscriber terminal with a SIM card having the identifier which was included in the activation message to be used in the mobile system within the scope of the restrictions on use, if the credit rating information indicates that the customer is financially reliable, and
removing the restrictions on use defined for the opened new subscription, when the customer has verified his identity and confirmed his contact information.

2. A method as claimed in claim 1, **characterized by**
receiving the activation message from a mobile system subscriber, in which the credit rating information is made up of an identifier identifying said subscriber, and
verifying the credit rating of the customer by checking that the credit rating of the subscriber who sent the activation message is acceptable.

3. A method as claimed in claim 1, **characterized by**
receiving an activation message, in which the credit rating is a credit card number, and
verifying the credit rating of the customer by checking that the credit rating of said credit card is acceptable.

4. A method as claimed in any one of claims 1 to 3, **characterized by** storing into the mobile system information on the new subscription, on the basis of which the mobile system allows the sending of an activation message by using said new subscription.

5. A method as claimed in any one of claims 1 to 4, **characterized by** removing the restrictions on use defined for the opened new subscription, when the customer has verified his identity in a service centre and confirmed his contact information.

6. A system comprising:
a subscriber register (HLR), in which information on the subscriptions of a mobile system (1) is maintained,
subscriber stations (MS, MS') enabling the use of the subscriptions and having associated with them SIM cards with information stored in them to indicate the subscription that each individual subscriber station uses, and
means (2) for entering the information of a new subscription and the identifier of the SIM card associated with the new subscription into the subscriber register (HLR), **characterized in**
**that** the system requires an activation of a new subscription for enabling use of said new subscription in said system, and
**that** the system further comprises:
means (2) for storing into memory restrictions on use defined for the new subscription and for utilizing them when using the subscription, said restrictions preventing certain types of calls and stopping the use of the subscription if a balance limit of the subscription is exceeded, and
activation means (4) arranged to receive an activation message that contains at least the identifier of the SIM card associated with the new subscription and credit rating information, and in response to the activation message, the activation means check the credit rating of the subscriber on the basis of the credit rating information in the activation message, and if the credit rating is acceptable, the activation means activate said new subscription by storing into the subscriber register (HLR) information that causes the mobile system to allow a subscriber terminal with a SIM card having the identifier which was included in the activation message to be used in the mobile system within the scope of the restrictions on use.

7. A system as claimed in claim 6, **characterized in that** the credit rating information consists of the identifier of the subscription used to send the activation message, said identifier being transmitted to the activation means with the activation message and that the activation means (4) are arranged to check the credit rating of the subscriber by checking from the mobile system (1) if the credit rating of the subscription used to send the activation message is acceptable.

8. A system as claimed in claim 6, **characterized in that** the credit rating information is a credit card number and that the activation means (4) are arranged to check the credit rating of the subscriber by checking that the credit rating of the credit card is acceptable.

9. A system as claimed in claim 6 or 8, **characterized in that** the system comprises means for receiving the activation message from the Internet (7).

10. A system as claimed in any one of claims 6 to 9, **characterized in that** the SIM card identifier is the serial number of the SIM card.

## Patentansprüche

1. Verfahren zum Öffnen einer neuen Teilnahme in einem mobilen System, wobei die neue Teilnahme ein Aktivieren in dem mobilen System erfordert, bevor sie in dem mobilen System verwendet werden kann, wobei das Verfahren aufweist:
Speichern einer Information bezüglich der neuen Teilnahme und der dieser zugehörigen SIM-Karte in einem Teilnehmerspeicher, wobei die SIM-Karte einen spezifischen Identifikator aufweist,
***gekennzeichnet durch***
Definieren von Beschränkungen bezüglich einer Verwendung für die neue Teilnahme, wobei die Beschränkungen bestimmte Ruftypen verhindern und die Verwendung der Teilnahme stoppen, wenn eine Kontogrenze der Teilnahme überschritten ist,
Übergeben der SIM-Karte, die der neuen Teilnahme zugehörig ist, an einen Kunden,
Empfangen einer Aktivierungsnachricht, die mindestens den Identifikator der SIM-Karte, die der neuen Teilnahme zugehörig ist, und eine Kreditbemessungsinformation enthält, von dem Kunden,
Prüfen, dass der Kunden finanziell seriös ist, mittels der Kreditbemessungsinformation, die in der Aktivierungsnachricht enthalten ist,
Aktivieren der neuen Teilnahme in dem mobilen System **durch** Speichern einer Information, die bewirkt, dass das mobile System zulässt, ein Teilnehmerendgerät mit einer SIM-Karte, die den Identifikator aufweist, welcher in der Aktivierungsnachricht enthalten gewesen ist, innerhalb des Umfangs der Beschränkungen bezüglich einer Verwendung zu verwenden, in dem Teilnehmerregister, wenn eine Kreditbemessungsinformation anzeigt, dass der Kunde finanziell seriös ist, und
Beseitigen der Beschränkungen bezüglich einer Verwendung, die für die geöfnete neue Teilnahme definiert sind, wenn der Kunde seine Identität nachgewiesen hat und seine Kontaktinformation bestätigt hat.

2. Verfahren nach Anspruch 1, ***gekennzeichnet durch***
Empfangen der Aktivierungsnachricht von einem Teilnehmer des mobilen Systems, in welcher die Kreditbemessungsinformation aus einem Identifikator besteht, der den Teilnehmer identifiziert, und
Prüfen der Kreditbemessung des Kunden **durch** Überprüfen, dass die Kreditbemessung des Teilnehmers, der die Aktivierungsnachricht gesendet hat, zulässig ist.

3. Verfahren nach Anspruch 1, ***gekennzeichnet durch***
Empfangen einer Aktivierungsnachricht, in welcher die Kreditbemessung eine Kreditkartennummer ist, und
Prüfen der Kreditbemessung des Kunden **durch** Überprüfen, dass die Kreditbemessung der Kreditkarte zulässig ist.

4. Verfahren nach einem der Ansprüche 1 bis 3, ***gekennzeichnet durch*** Speichern einer Information bezüglich der neuen Teilnahme auf der Grundlage deren das mobile System das Senden einer Aktivierungsnachricht unter Verwendung der neuen Teilnahme zulässt, in dem mobilen System.

5. Verfahren nach einem der Ansprüche 1 bis 4, ***gekennzeichnet durch*** Beseitigen der Einschränkungen bezüglich einer Verwendung, die für die geöffnete neue Teilnahme definiert sind, wenn der Kunde seine Identität in eine Dienstzentrale nachgewiesen hat und seine Kontaktinformation bestätigt hat.

6. System, das aufweist:
ein Teilnehmerregister (HLR), in welchem eine Information bezüglich der Teilnahmen eines mobilen Systems (1) gehalten wird,
Teilnehmerstationen (MS, MS'), die das Verwenden der Teilnahmen zulassen und diesen zugehörig SIM-Karten mit einer in diesen gespeicherten Information aufweisen, um die Teilnahme anzuzeigen, die jede einzelne Teilnehmerstation verwendet, und
eine Einrichtung (2) zum Eingeben der Information einer neuen Teilnahme und des Identifikators der SIM-Karte, die der neuen Teilnahme zugehörig ist, in das Teilnahmerregister (HLR),
***dadurch gekennzeichnet, dass***
das System weiterhin aufweist:
eine Einrichtung (2) zum Speichern von Beschränkungen bezüglich einer Verwendung, die für die neue Teilnahme definiert sind, in einem Speicher, und zum Verwenden von diesen, wenn die Teilnahme verwendet wird, wobei die Beschränkungen bestimmte Ruftypen verhindern und das Verwenden der Teilnahme stoppen, wenn eine Kontogrenze der Teilnahme überschritten wird, und
eine Aktivierungseinrichtung (4), die angeordnet ist, um eine Aktivierungsnachricht zu empfangen, die mindestens den Identifikator der SIM-Karte, die der neuen Teilnahme zugehörig ist, und eine Kreditbemessungsinformation enthält, wobei die Aktivierungseinrichtung als Reaktion auf die Aktivierungsnachricht die Kreditbemessung des Teilnehmers auf der Grundlage der Kreditbemessungsinformation in der Aktivierungsnachricht überprüft und wobei die Aktivierungseinrichtung, wenn die Kreditbemessung zulässig ist, die neue Teilnahme durch Speichern einer Information, die bewirkt, dass das mobile System zulässt, ein Teilnehmerendgerät mit einer SIM-Karte, die den Identifikator aufweist, der in der Aktivierungsnachricht enthalten gewesen ist, in dem mobilen Endgerät innerhalb des Umfangs der Beschränkungen bezüglich einer Verwendung zu verwenden, in dem Teilnehmerregister (HLR) aktiviert.

7. System nach Anspruch 6, ***dadurch gekennzeichnet, dass*** die Kreditbemessungsinformation aus dem Identifikator der Teilnahme besteht, der verwendet wird, um die Aktivierungsnachricht zu senden, wobei der Identifikator mit der Aktivierungsnachricht zu der Aktivierungseinrichtung gesendet wird, und die Aktivierungseinrichtung (4) angeordnet ist, um die Kreditbemessung des Teilnehmers durch Überprüfen von dem mobilen System (1) zu überprüfen, ob die Kreditbemessung der Teilnahme zulässig ist, die verwendet wird, um die Aktivierungsnachricht zu senden.

8. System nach Anspruch 6, ***dadurch gekennzeichnet, dass*** die Kreditbemessungsinformation eine Kreditkartennummer ist und die Aktivierungseinrichtung (4) angeordnet ist, um die Kreditbemessung des Teilnehmers durch Überprüfen zu überprüfen, dass die Kreditbemessung der Kreditkarte zulässig ist.

9. System nach Anspruch 6 oder 8, ***dadurch gekennzeichnet, dass** das System* eine Einrichtung zum Empfangen der Aktivierungsnachricht aus dem Internet (7) aufweist.

10. System nach einem der Ansprüche 6 bis 9, ***dadurch gekennzeichnet, dass*** der SIM-Karten-Identifikator die Seriennummer der SIM-Karte ist.

## Revendications

1. Procédé pour ouvrir un nouvel abonnement dans un système mobile, ledit nouvel abonnement nécessitant une activation dans le système mobile avant qu'il ne puisse être utilisé dans ledit système mobile, comprenant :
un stockage, dans un registre d'abonnés du système mobile, d'informations sur le nouvel abonnement et la carte SIM associée à celui-ci, ladite carte SIM possédant un identifiant spécifique, **caractérisé par**
une définition de restrictions d'utilisation pour le nouvel abonnement, lesdites restrictions empêchant certains types d'appel et interrompant l'utilisation de l'abonnement si un plafond de l'abonnement est dépassé,
une remise de la carte SIM associée au nouvel abonnement à un client,
une réception de la part du client d'un message d'activation contenant au moins l'identifiant de la carte SIM associée audit nouvel abonnement et une information sur la solvabilité,
une vérification, au moyen de l'information sur la solvabilité incluse dans le message d'activation, que le client est solvable,
une activation dudit nouvel abonnement dans le système mobile en stockant dans le registre d'abonnés des informations amenant le système mobile à autoriser qu'un terminal d'abonné avec une carte SIM possédant l'identifiant inclus dans le message d'activation soit utilisé dans le système mobile dans la limite des restrictions d'utilisation, si l'information sur la solvabilité indique que le client est solvable, et
une suppression des restrictions d'utilisation définies pour le nouvel abonnement ouvert, lorsque le client a vérifié son identité et confirmé ses coordonnées.

2. Procédé tel que revendiqué dans la revendication 1, **caractérisé par**
une réception du message d'activation de la part d'un abonné de système mobile, dans lequel l'information sur la solvabilité est constituée par un identifiant pour identifier ledit abonné, et
une vérification de la solvabilité du client en contrôlant que la solvabilité de l'abonné qui a envoyé le message d'activation est acceptable.

3. Procédé tel que revendiqué dans la revendication 1, **caractérisé par**
une réception d'un message d'activation, dans lequel la solvabilité est un numéro de carte de crédit, et
une vérification de la solvabilité du client en contrôlant que la solvabilité de ladite carte de crédit est acceptable.

4. Procédé tel que revendiqué dans l'une quelconque des revendications 1 à 3, **caractérisé par** un stockage dans le système mobile d'informations sur le nouvel abonnement, sur la base desquelles le système mobile autorise l'envoi d'un message d'activation en utilisant ledit nouvel abonnement.

5. Procédé tel que revendiqué dans l'une quelconque des revendications 1 à 4, **caractérisé par** une suppression des restrictions d'utilisation définies pour le nouvel abonnement ouvert, lorsque le client a vérifié son identité dans un centre de services et confirmé ses coordonnées.

6. Système comprenant :
un registre d'abonnés (HLR), dans lequel des informations sur les abonnements d'un système mobile (1) sont conservées,
des postes d'abonnés (MS, MS') permettant l'utilisation des abonnements et avec lesquelles sont associées des cartes SIM stockant des informations pour indiquer l'abonnement que chaque poste d'abonné individuel utilise, et
un moyen (2) pour entrer les informations d'un nouvel abonnement et l'identifiant de la carte SIM associée au nouvel abonnement dans le registre d'abonnés (HLR), **caractérisé en ce**
**que** le système nécessite une activation d'un nouvel abonnement pour permettre une utilisation dudit nouvel abonnement dans ledit système, et en ce
**que** le système comprend en outre :
un moyen (2) pour stocker dans une mémoire des restrictions d'utilisation définies pour le nouvel abonnement et pour les utiliser lors de l'utilisation de l'abonnement, lesdites restrictions empêchant certains types d'appels et interrompant l'utilisation de l'abonnement si un plafond de l'abonnement est dépassé, et
un moyen d'activation (4) agencé pour recevoir un message d'activation contenant au moins l'identifiant de la carte SIM associée au nouvel abonnement et l'information sur la solvabilité, et en réponse au message d'activation, le moyen d'activation vérifie la solvabilité de l'abonné sur la base de l'information sur la solvabilité dans le message d'activation, et si la solvabilité est acceptable, le moyen d'activation active ledit nouvel abonnement en stockant dans le registre d'abonnés (HLR) des informations amenant le système mobile à autoriser qu'un terminal d'abonné, avec une carte SIM possédant l'identifiant inclus dans le message d'activation, soit utilisé dans le système mobile dans la limite des restrictions d'utilisation.

7. Système tel que revendiqué dans la revendication 6, **caractérisé en ce que** l'information sur la solvabilité est constituée par l'identifiant de l'abonnement utilisé pour envoyer le message d'activation, ledit identifiant étant transmis au moyen d'activation avec le message d'activation et **en ce que** le moyen d'activation (4) est agencé pour vérifier la solvabilité de l'abonné en vérifiant à partir du système mobile (1) si la solvabilité de l'abonnement utilisé pour envoyer le message d'activation est acceptable.

8. Système tel que revendiqué dans la revendication 6, **caractérisé en ce que** l'information sur la solvabilité est un numéro de carte de crédit et **en ce que** le moyen d'activation (4) est agencé pour vérifier la solvabilité de l'abonné en vérifiant si la solvabilité de la carte de crédit est acceptable.

9. Système tel que revendiqué dans la revendication 6 ou 8, **caractérisé en ce que** le système comprend un moyen pour recevoir le message d'activation de l'Internet (7).

10. Système tel que revendiqué dans l'une quelconque des revendications 6 à 9, **caractérisé en ce que** l'identifiant de la carte SIM est le numéro de série de la carte SIM.
